# EUROPEAN PATENT SPECIFICATION

(11) **EP 3 173 826 B1**
(45) Date of publication and mention of the grant of the patent: **13.02.2019**
(21) Application number: 15196835.1
(22) Date of filing: 27.11.2015
(51) Int. Cl.: G02B 1/04, C09B 69/10

(54) **HYDROGEL COMPOSITION AND HYDROGEL CONTACT LENSES MADE OF THE COMPOSITION**
HYDROGELZUSAMMENSETZUNG UND AUS DIESER ZUSAMMENSETZUNG HERGESTELLTE HYDROGELKONTAKTLINSEN
COMPOSITION D'HYDROGEL ET LENTILLES DE CONTACT À HYDROGEL CONSTITUÉES DE LA COMPOSITION

(43) Date of publication of application: 31.05.2017
(73) Proprietor: Pegavision Corporation, Taoyuan City 333 (TW)
(72) Inventor: Chiang, Te-Ju, Taoyuan City (TW); Yu, Hsiao-Ting, Taoyuan City (TW); Chang, Han-Yi, Taoyuan City (TW); Lai, Yu-Chin, Taoyuan City (TW)
(74) Representative: Zimmermann & Partner Patentanwälte mbB

(56) References cited:
- WO-A1-2009/102454
- US-A1- 2007 092 831

## Description

### BACKGROUND

### Field of Disclosure

The present disclosure relates to a hydrogel composition as defined in claim 1. More particularly, the present disclosure relates to a blue light-blocking hydrogel composition.

### Description of Related Art

Since contact lenses made of hydrogel have good moisturizing capabilities, hydrogel contact lenses can provide sufficient water content to cornea even wearing them for a long time and improve the uncomfortable symptoms of eyes caused by the dryness of cornea. Therefore, hydrogel has become one of the preferred components of contact lenses. US2007/092831 A1 describes a radiation-absorbing polymeric material comprising 1 wt % to 3 wt % of a polymerizable UV radiation-absorbing benzotriazole or derivative thereof, 0.001 wt % to 0.2 wt % of a polymerizable violet light-absorbing compound, and a polymerizable monomer, wherein the radiation-absorbing polymeric material absorbs substantially all UV-A radiation, at least about 80 percent of light having wavelengths from about 400 nm to about 425 nm and absorbs less than about 30 percent of light having wavelength of 475 nm incident on a piece of the polymeric material having a thickness of about 1 mm. WO 2009/102454 A1 describes a polymeric ophthalmic lens material comprising a polymeric ophthalmic lens material comprising a) one or more lens-forming polymerizable monomers selected from the group of hydrophilic acrylate-substitute monomers, hydrophobic acrylate-substituted monomers, vinyl-substituted monomers, and platinum-catalyzed vinyl hydride addition-cured silicones, b) a polymerizable ultraviolet absorber and c) a polymerizable yellow dye.

A lot of electronic display devices such as television screens, computer monitors, tablets, mobile phones have used a light emitting diode (LED) as a light source for twenty years. It is well known that blue light, which is characterized by a wavelength of 380-500 nanometers (nm) and emitted from the LED, easily causes eye diseases. In the case of prolonged use of tablet or mobile phone may damage retina, and further induce the early development of cataract and macular degeneration because eyes are prolonged exposure to blue light.

In the current market, however, there is a lack of contact lenses which can block blue light and have a high water content. Therefore, it is essential for manufacturing a hydrogel contact lens which can block blue light and have a high water content.

### SUMMARY

In view of the issue un-met in the art, the present disclosure provides a hydrogel composition which can block blue light, and a hydrogel contact lens made of the hydrogel composition may have a high water content and blue light-blocking efficacy.

The present disclosure provides a hydrogel composition for manufacturing a hygrogel contact lens as defined in claim 1.

In various embodiments of the present disclosure, the hydrophilic monomer is in a range from 96.5 to 99.68 parts by weight.

In various embodiments of the present disclosure, the hydrogel composition further includes a silicone component selected from a group consisting of a silicone monomer, a silicone macromer and a silicone prepolymer, and in which the silicone component is in a range from 5 to 59 parts by weight, and the hydrophilic monomer is in a range from 30 to 60 parts by weight.

In various embodiments of the present disclosure, the silicone monomer has a structure of formula (1): 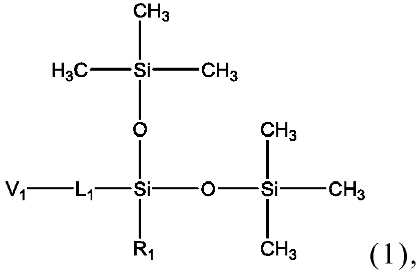 which V₁ is 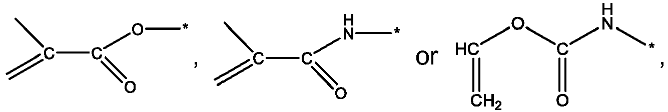 L₁ is a C3-C7 alkylene group or 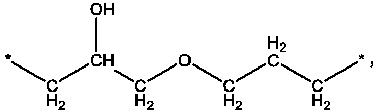 and R₁ is a methyl group or 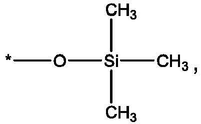 which * is a linkage position of V₁, L₁ and R₁ in the structure of formula (1).

In various embodiments of the present disclosure, the silicone macromer has a structure of formula (2): 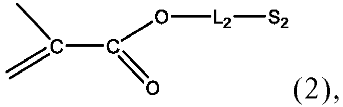 which L₂ is a C3-C10 alkylene group, 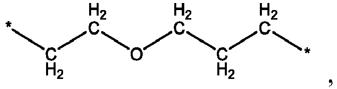 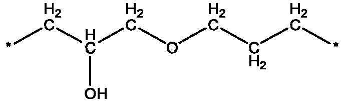 or 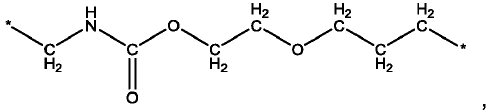 and S₂ is 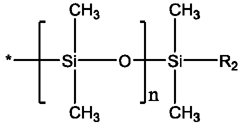 or 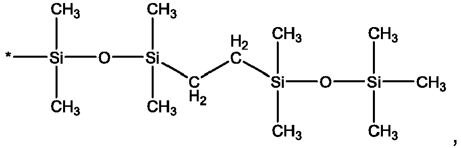 which R₂ is C3-C5 alkyl group, n is an integer from 2 to 4, and * is a linkage position of V₂ and S₂ in the structure of formula (2).

In various embodiments of the present disclosure, the silicone prepolymer has a structure of formula (3): 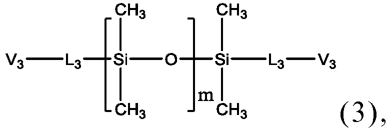 which V₃ is 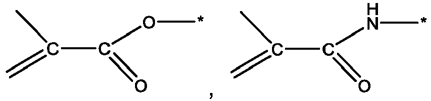 or 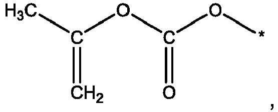 L₃ is a C2-C5 alkylene group, and m is an integer from 10 to 50, which * is a linkage position of V₃ in the structure of formula (3).

In various embodiments, some of which are not part of the present invention, the yellow dye has a structure of formula (4): 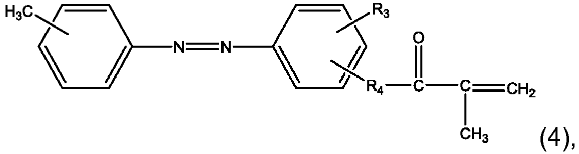 which R₃ is -CH₃, and R₄ is -O- -.

As such, a yellow dye of the invention has a structure of formula (6):

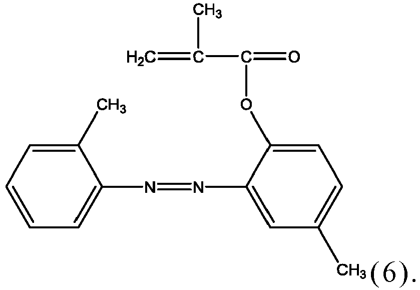

In various other embodiments of the present disclosure, the yellow dye has a sulfonyl group or a sulfonate group.

In various embodiments of the present disclosure, when the yellow dye has the sulfonyl group, the yellow dye has a structure of formula (7):

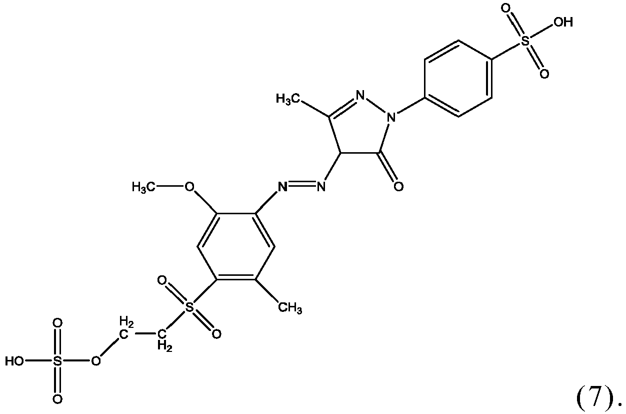

In various embodiments of the present disclosure, when the yellow dye has the sulfonate group, the yellow dye has a structure of formula (8):

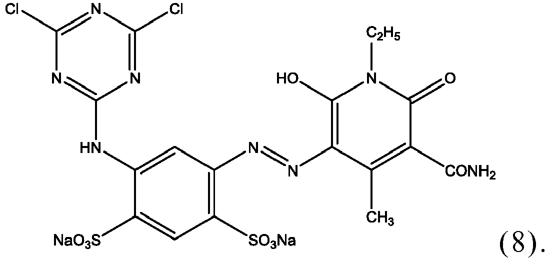

In various other embodiments of the present disclosure, the yellow dye has an amide group.

When the yellow dye has the amide group, the yellow dye has a structure of formula (9):

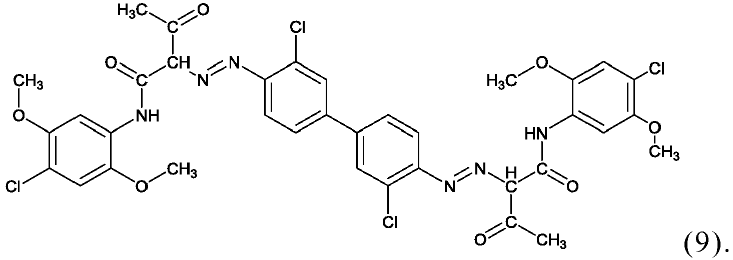

The hydrophilic monomer is selected from a group consisting of N-vinyl pyrrolidone (NVP), 2-hydroxyethyl methacrylate (HEMA), glyceryl methacrylate (GM), methacrylic acid, acrylic acid, N,N-dimethyl acrylamide (DMA), N,N-dimethyl methacrylamide and N-vinyl-N-methyl acetamide.

The crosslinker is selected from a group consisting of ethylene glycol dimethacrylate, diethylene glycol dimethacrylate, triethylene glycol dimethacrylate, tetraethylene glycol dimethacrylate, allyl methacrylate, ethylene glycol diallyl ether, triethylene glycol diallyl ether, tetraethylene glycol diallyl ether, triallyl-s-triazine-2,4,6(1H,3H,5H)- trione and 1,1,1-trimethylolpropane trimethacrylate.

The initiator is a photoinitiator.

In various embodiments of the present disclosure, the photoinitiator is a phosphine-oxide-based initiator, a titanium metallocene-based initiator or a combination thereof.

In various embodiments of the present disclosure, the phosphine-oxide-based initiator is selected from a group consisting of diphenyl (2,4,6-triphenyl)phosphine oxide, bis(2,4,6-trimethylbenzoyl)phenyl phosphine oxide and bis(2,6-dimethoxylbenzoyl)(2,4,4-trimethylpentyl) phosphine oxide.

In various embodiments of the present disclosure, the titanium metallocene-based initiator comprises dicyclopentadienyl bis[2,4-difluoro-3-(1-pyrrolyl) phenyl] titanium.

In various embodiments of the present disclosure, the hydrogel composition further includes an UV-blocking monomer in a range from 0.5 to 2 parts by weight.

In various embodiments of the present disclosure, the UV-blocking monomer has benzophenone, benzotriazole or a combination thereof.

In various embodiments of the present disclosure, when the UV-blocking monomer has benzophenone, the UV-blocking monomer is selected from a group consisting of 4-methacryloxy-2-hydroxy benzophenone and 4-(2-acryloxyethoxy-2-hydroxy benzophenone.

In various embodiments of the present disclosure, when the UV-blocking monomer has benzotriazole, the UV-blocking monomer is selected from a group consisting of 2-(2-hydroxy-5-methacryloxyethylphenyl)-2H-benzotriazole, 2-(2-hydroxy-5-methacryloxyethylphenyl)-2H-6-chloro-benzotriazole, 2-(2-hydroxy-5-methacryloxyethylphenyl)-2H- 6-methoxybenzotriazole, 2-[3'-t-butyl-5'-(3"-dimethylvinylsilylpropoxy)-2'-hydroxyphenyl]-5-methoxybenzo triazole, 2-[3'-t-butyl-5'- (3"-methacryloyloxypropyl)phenyl]-5-chlorobenzotriazole and 2-[2'-hydroxy-5'-(*γ*-methacryloyloxypropoxy)-3'-tert-butylphenyl]-5-methoxy-2H-benzotriazole.

In various embodiments of the present disclosure, the hydrogel composition further includes a hydrophobic monomer in a range from 1 to 10 parts by weight.

In various embodiments of the present disclosure, the hydrophobic monomer is selected from a group consisting of methyl methacrylate, butyl methacrylate, n-hexyl methacrylate and isobornyl methacrylate.

In various embodiments of the present disclosure, the hydrogel composition further includes an organic solvent in a range from 1 to 30 parts by weight.

In various embodiments of the present disclosure, the organic solvent is selected from a group consisting of glycerol, n-butanol, t-butanol, t-amyl alcohol and n-hexanol.

The present disclosure also provides a hydrogel contact lens. The hydrogel contact lens includes a contact lens body made of the hydrogel composition stated above.

These and other features, aspects, and advantages of the present disclosure will become better understood with reference to the following description and appended claims.

It is to be understood that both the foregoing general description and the following detailed description are by examples, and are intended to provide further explanation of the invention as claimed.

### DETAILED DESCRIPTION

Reference will now be made in detail to the present embodiments of the invention, examples of which are illustrated in the accompanying drawings. Wherever possible, the same reference numbers are used in the drawings and the description to refer to the same or like parts.

The following embodiments are disclosed for detailed description. For illustration clarity, many details of practice are explained in the following descriptions. However, it should be understood that these details of practice do not intend to limit the present invention. That is, these details of practice are not necessary in parts of embodiments of the present invention. Furthermore, for simplifying the drawings, some of the conventional structures and elements are shown with schematic illustrations.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising", or "includes" and/or "including" or "has" and/or "having" when used in this specification, specify the presence of stated features, regions, integers, steps, operations, elements, and/or components, but do not preclude the presence or addition of one or more other features, regions, integers, steps, operations, elements, components, and/or groups thereof.

As aforementioned problems, it is noted that eyes' prolonged exposure to blue light are easy to cause eye diseases. However, while full blockage of blue light can offer the best protection of eyes, it may cause poor vision, especially during the evening. Therefore, how to manufacture a hydrogel contact lens which can simultaneously protect eyes and maintain a good vision, especially in the evening, is still an issue un-met in the art.

In view of the issue un-met in the art, the present disclosure provides a hydrogel composition for manufacturing a hydrogel contact lens. A hydrogel contact lens made of the hydrogel composition can block blue light partially to protect eyes and has a clear vision even during evening.

The present disclosure provides a hydrogel composition for manufacturing a hydrogel contact lens. The hydrogel composition includes a hydrophilic monomer, a blue light-blocking monomer, a crosslinker and an initiator. The hydrophilic monomer is in a range from 30 to 99.68 parts by weight. The blue light-blocking monomer is in a range from 0.02 to 0.5 part by weight and has a yellow dye. The crosslinker is in a range from 0.1 to 1 parts by weight. The initiator is in a range from 0.2 to 2 parts by weight.

In various embodiments of the present disclosure, the hydrophilic monomer is in a range from 96.5 to 99.68 parts by weight.

The hydrophilic monomer is selected from a group consisting of N-vinyl pyrrolidone (NVP), 2-hydroxyethyl methacrylate (HEMA), glyceryl methacrylate (GM), methacrylic acid, acrylic acid, N,N-dimethyl acrylamide (DMA), N,N-dimethyl methacrylamide and N-vinyl-N-methyl acetamide.

In various embodiments of the present disclosure, the hydrogel composition further includes a silicone component selected from a group consisting of a silicone monomer, a silicone macromer and a silicone prepolymer. When the hydrogel composition includes a silicone component, the hydrogel composition includes the silicone component in a range from 5 to 59 parts by weight, the hydrophilic monomer in a range from 30 to 60 parts by weight, the blue light-blocking monomer in a range from 0.02 to 0.5 part by weight and has a yellow dye, the crosslinker in a range from 0.1 to 1 part by weight and the initiator in a range from 0.2 to 2 parts by weight.

Specifically, the silicone component may be selected from a group consisting of a silicone monomer, a silicone macromer and a silicone prepolymer. The silicone monomer, the silicone macromer and the silicone prepolymer may be selected from various components listed in Table 1.

**Table 1**

| | | |
|---|---|---|
| Silicone monomer | 1 | 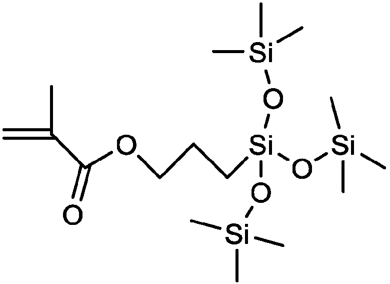 |
| | 2 | 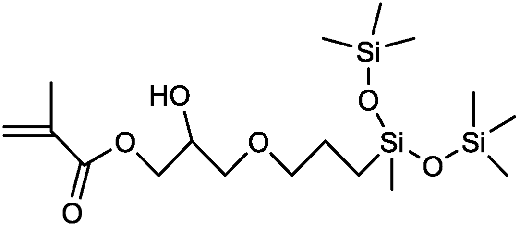 |
| | 3 | 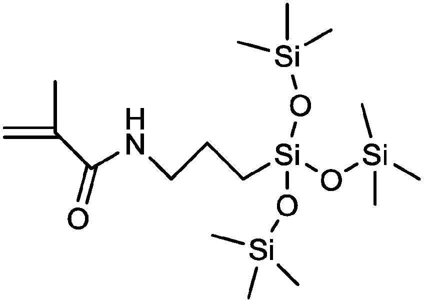 |
| | 4 | 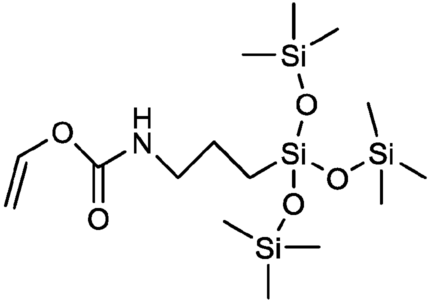 |
| Silicone macromer | 5 | 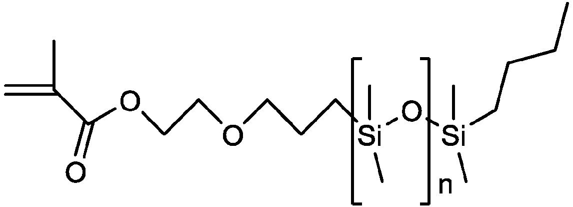 |
| | 6 | 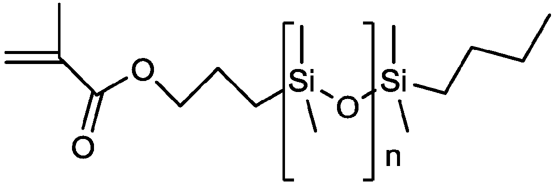 |
| | 7 | 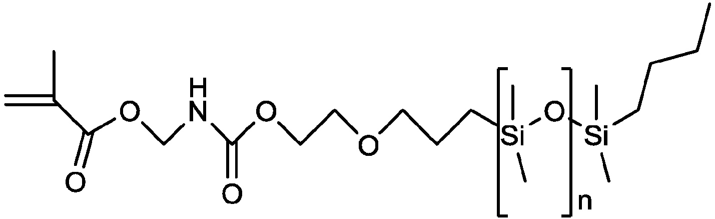 |
| | 8 | 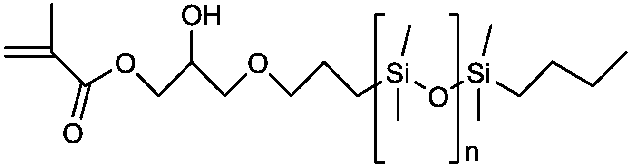 |
| | 9 | 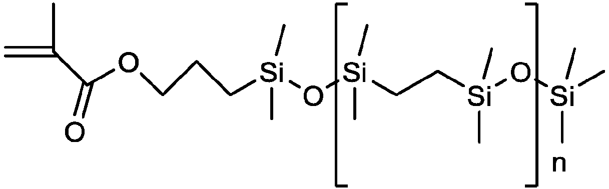 |
| Silicone prepolymer | 10 | 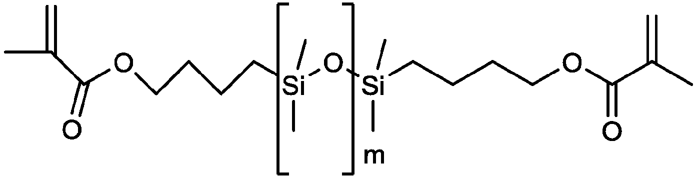 |
| | 11 | 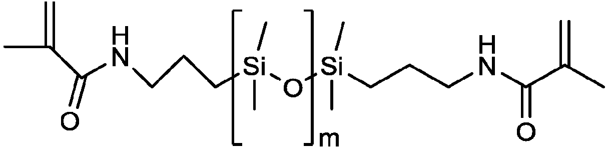 |
| | 12 | 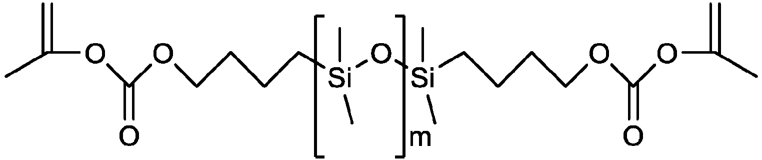 |

In various embodiments of the present disclosure, the yellow dye may be a component which have an ethylenically- based polymerizable group, a sulfonyl group, a sulfonate group and an amide group, as shown in Table 2.

**Table 2**

| | | |
|---|---|---|
| The yellow dye having the ethylenically-based polymerizable group | Reference Structure 1 | 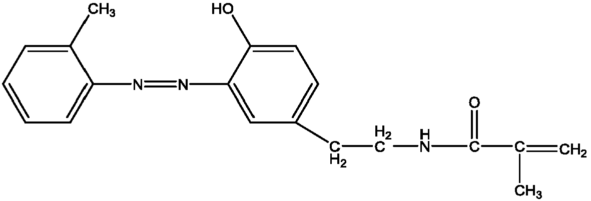 |
| | Structure 2 | 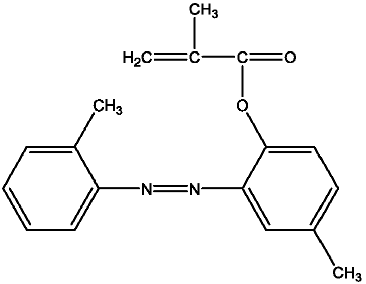 |
| The yellow dye having the sulfonyl group | Structure 3 | 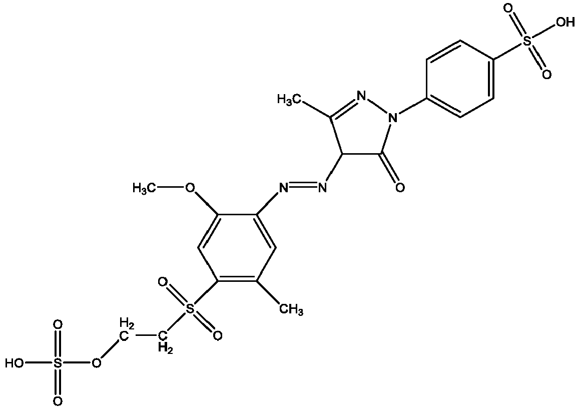 |
| The yellow dye having the sulfonate group | Structure 4 | 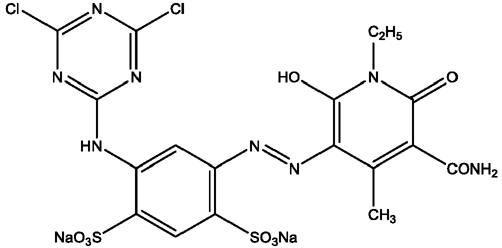 |
| The yellow dye having the amide group | Structure 5 | 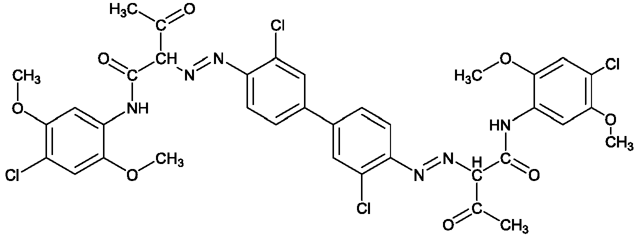 |

The crosslinker is selected from a group consisting of ethylene glycol dimethacrylate, diethylene glycol dimethacrylate, triethylene glycol dimethacrylate, tetraethylene glycol dimethacrylate, allyl methacrylate, ethylene glycol diallyl ether, triethylene glycol diallyl ether, tetraethylene glycol diallyl ether, triallyl-s-triazine-2,4,6(1H,3H,5H)- trione and 1,1,1-trimethylolpropane trimethacrylate.

The initiator is a photoinitiator. The photoinitiator may be a phosphine-oxide-based initiator, a titanium metallocene-based initiator or a combination thereof.

In various embodiments of the present disclosure, the phosphine-oxide-based initiator is selected from a group consisting of diphenyl (2,4,6-triphenyl)phosphine oxide, bis(2,4,6-trimethylbenzoyl)phenyl phosphine oxide and bis(2,6-dimethoxylbenzoyl)(2,4,4-trimethylpentyl) phosphine oxide.

In various embodiments of the present disclosure, the titanium metallocene-based initiator comprises dicyclopentadienyl bis[2,4-difluoro-3-(1-pyrrolyl) phenyl] titanium.

In various embodiments of the present disclosure, the hydrogel composition further includes an UV-blocking monomer in a range from 0.5 to 2 parts by weight. The UV-blocking monomer has benzophenone, benzotriazole or a combination thereof.

In various embodiments of the present disclosure, when the UV-blocking monomer has benzophenone, the UV-blocking monomer is selected from a group consisting of 4-methacryloxy-2-hydroxy benzophenone and 4-(2-acryloxyethoxy-2-hydroxy benzophenone.

In various embodiments of the present disclosure, when the UV-blocking monomer has benzotriazole, the UV-blocking monomer is selected from a group consisting of 2-(2-hydroxy-5-methacryloxyethylphenyl)-2H-benzotriazole, 2-(2-hydroxy-5-methacryloxyethylphenyl)-2H-6-chloro-benzotriazole, 2-(2-hydroxy-5-methacryloxyethylphenyl)-2H- 6-methoxybenzotriazole, 2-[3'-t-butyl-5'-(3"-dimethylvinylsilylpropoxy)-2'-hydroxyphenyl]-5-methoxybenzo triazole, 2-[3'-t-butyl-5'- (3"-methacryloyloxypropyl)phenyl]-5-chlorobenzotriazole and 2-[2'-hydroxy-5'-(*γ*-methacryloyloxypropoxy)-3'-tert-butylphenyl]-5-methoxy-2H-benzotriazole.

In various embodiments of the present disclosure, the hydrogel composition further includes a hydrophobic monomer in a range from 1 to 10 parts by weight. The hydrophobic monomer is selected from a group consisting of methyl methacrylate, butyl methacrylate, n-hexyl methacrylate and isobornyl methacrylate.

In various embodiments of the present disclosure, the hydrogel composition further includes an organic solvent in a range from 1 to 30 parts by weight. The organic solvent is selected from a group consisting of glycerol, n-butanol, t-butanol, t-amyl alcohol and n-hexanol.

The hydrogel composition stated above was filled into and between two polypropylene molds, and cured under visible light to fabricate a hydrogel contact lens. The hydrogel contact lens was subsequently dry-released from molds and extracted with hot water. After being extracted with hot water, the hydrogel contact lens was placed in the polypropylene blister package filled with borate buffered saline. The polypropylene blister package was sealed with aluminum foil and autoclaved at 120°C for 30 minutes.

The hydrogel contact lens made by the manufacturing method stated above has a water content in a range of 38-80%, preferably 40-70%, and can also block 10-55% blue light which is characterized by a wavelength of 380-500 nanometers (nm).

The following hydrogel compositions are only exemplary, but not intended to limit the present disclosure. Specifically, each of the hydrogel compositions 1-8 includes 2-hydroxyethyl methacrylate (HEMA) 95 parts by weight, methacrylic acid 1.9 parts by weight, ethylene glycol dimethacrylate 0.8 part by weight, 1,1,1-trimethylolpropane trimethacrylate 0.15 part by weight, bis(2,4,6-trimethylbenzoyl)phenyl phosphine oxide 0.5 part by weight, 2-(2-hydroxy-5-methacryloxyethylphenyl)-2H-benzotriazole 1.0 part by weight, a reactive blue dye 19 (RB19) 0.03 part by weight and a yellow dye with different structures and amount as shown in Table 3. Table 3 shows the transmittance of blue light (380-500 nm) of the hydrogel contact lenses made of the hydrogel compositions 1-8.

**Table 3**

| Hydrogel compositions | 1 (Control) | 2 | 3 | 4 | 5 | 6 | 7 | 8 |
|---|---|---|---|---|---|---|---|---|
| Yellow dye with structure 1 (parts by weight) | 0 | 0.1 | 0.15 | 0 | 0 | 0 | 0 | 0 |
| Yellow dye with structure 2 (parts by weight) | 0 | 0 | 0 | 0.15 | 0 | 0 | 0 | 0 |
| Yellow dye with structure 4 (parts by weight) | 0 | 0 | 0 | 0 | 0.1 | 0 | 0 | 0 |
| Yellow dye with structure 5 (parts by weight) | 0 | 0 | 0 | 0 | 0 | 0.02 | 0.03 | 0.13 |
| Transmittance of blue light (%) | 98% | 60% | 45% | 80% | 55% | 85% | 75% | 50% |
| Blockage of blue light (%) | 0 | 40% | 55% | 20% | 45% | 15% | 25% | 50% |

As shown in Table 3, when the yellow dye of the hydrogel compositions is in a range from 0.02 to 0.15 part by weight, the transmittance of blue light of the hydrogel contact lenses made of the hydrogel compositions 1-8 are 45-85%. In other words, the hydrogel contact lenses can block 15-55% blue light. Accordingly, users can prevent their eyes from the damage of blue light and have a clear vision, even during the evening, while wearing the hydrogel contact lenses made of the hydrogel compositions 1-8.

Then, visual acuity and contrast sensitivity of the comprehensive tests were performed. The quantity of letters which can be correctly identified by the subjects under different environmental conditions (sun light, regular room light and dim light) and contrast were also measured

The above tests were performed by 30 subjects who are between 25-40 years old. The visual acuity of the subjects was 20/25 while wearing their habitual contact lenses, in which the "20/25" means that ordinary people can see a visual target at 25 feet, but the subjects can only see the visual target at 20 feet. First, subjects respectively wore hydrogel contact lenses (experimental contact lenses) and normal contact lenses (control contact lenses), in which the hydrogel contact lenses (experimental contact lenses) were made of the hydrogel composition 7 stated above were with 25% blockage of blue light. In contrast, the normal contact lenses (control contact lenses) could not block the blue light. Furthermore, the experimental contact lenses and the control contact lenses both had the same base curve and diameter. Next, the subjects were evaluated for visual acuity and contrast sensitivity by identifying 60 test letters at 4-meter distance under the different environmental conditions (sun light, regular room light and dim light) and the different contrast levels about the colors of letters and background. The quantity of letters that could be correctly identified reflects the visual acuity and the contrast sensitivity of the subjects, and the results (p < 0.05) are shown in Table 4.

**Table 4**

| Sun light (≧58,000 Lux) | | |
|---|---|---|
| | Experimental contact lens (with 25% blockage of blue light) | Control contact lens |
| High contrast (100%) | 58.33 | 55.33 |
| Medium contrast (10%) | 52.67 | 51.00 |
| Low contrast (2.5%) | 42.33 | 37.33 |
| Regular room light (190-640 Lux) | | |

| | Experimental contact lens (with 25% blockage of blue light) | Control contact lens |
|---|---|---|
| High contrast (100%) | 58.33 | 57.67 |
| Medium contrast (10%) | 51.67 | 50.33 |
| Low contrast (2.5%) | 37.33 | 36 |
| Dim light (2.7∼7.1 Lux) | | |

| | Experimental contact lens (with 25% blockage of blue light) | Control contact lens |
|---|---|---|
| High contrast (100%) | 58.00 | 58.33 |
| Medium contrast (10%) | 46.67 | 43.00 |
| Low contrast (2.5%) | 30.67 | 28.33 |

As a result, no matter under sun light, regular room light or dim light, and high contrast, medium contrast or low contrast, the experimental contact lenses with 25% blockage of blue light does not affect the subjects to correctly identify letters. Further, while wearing the experimental contact lenses, the subjects can correctly identify more quantity of letters than wearing the control contact lenses, and have better visual acuity and contrast sensitivity. Even wearing the experimental contact lenses in the dim light environment, the subjects still have better visual acuity and contrast sensitivity.

The embodiments of the present disclosure discussed above have advantages over existing contact lens, and the advantages are summarized below. The hydrogel contact lens made of the hydrogel composition in the present disclosure can block 10-55% blue light to protect eyes from exposing to the harmful blue light, and further prevent eye diseases such as cataract and macular degeneration. In addition, the hydrogel contact lens made of the hydrogel composition of the present disclosure do not affect but even improve the visual acuity and the contrast sensitivity of the users. Therefore, the users wearing the hydrogel contact lens provided by the present disclosure can have a good vision even under the dim light.

Although the present invention has been described in considerable detail with reference to certain embodiments thereof, other embodiments are possible.

It will be apparent to those skilled in the art that various modifications and variations can be made to the structure of the present invention without departing from the scope of the invention. In view of the foregoing, it is intended that the present invention cover modifications and variations of this invention provided they fall within the scope of the following claims.

## Claims

1. A hydrogel composition for manufacturing a hygrogel contact lens, the hydrogel composition comprising:
a hydrophilic monomer in a range from 30 to 99.68 parts by weight, wherein the hydrophilic monomer is selected from a group consisting of N-vinyl pyrrolidone (NVP), 2-hydroxyethyl methacrylate (HEMA), glyceryl methacrylate (GM), methacrylic acid, acrylic acid, N,N-dimethyl acrylamide (DMA), N,N-dimethyl methacrylamide and N-vinyl-N-methyl acetamide;
a blue light-blocking monomer in a range from 0.02 to 0.5 part by weight and having a yellow dye, wherein the yellow dye has a sulfonyl group, a sulfonate group, a structure of formula (6): 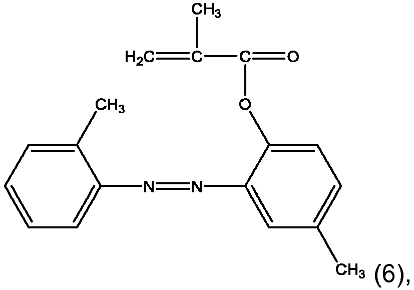 or a structure of formula (9): 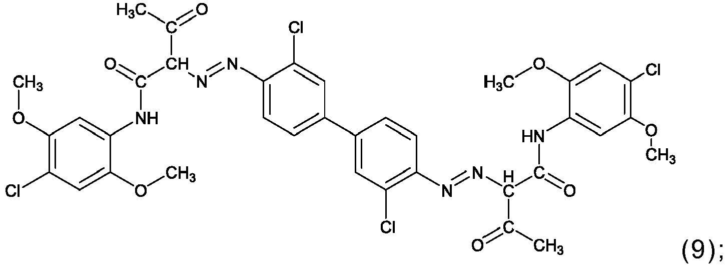
a crosslinker in a range from 0.1 to 1 part by weight, wherein the crosslinker is selected from a group consisting of ethylene glycol dimethacrylate, diethylene glycol dimethacrylate, triethylene glycol dimethacrylate, tetraethylene glycol dimethacrylate, allyl methacrylate, ethylene glycol diallyl ether, triethylene glycol diallyl ether, tetraethylene glycol diallyl ether, triallyl-s-triazine-2,4,6(1H,3H,5H)- trione and 1,1,1-trimethylolpropane trimethacrylate; and
an initiator in a range from 0.2 to 2 parts by weight, wherein the initiator is a photoinitiator.

2. The hydrogel composition of claim 1, wherein the hydrophilic monomer is in a range from 96.5 to 99.68 parts by weight.

3. The hydrogel composition of Claim 1, further comprising a silicone component selected from a group consisting of a silicone monomer, a silicone macromer and a silicone prepolymer, and wherein the silicon component is in a range from 5 to 59 parts by weight, and the hydrophilic monomer is in a range from 30 to 60 parts by weight.

4. The hydrogel composition of claim 3, wherein the silicone monomer has a structure of formula (1): 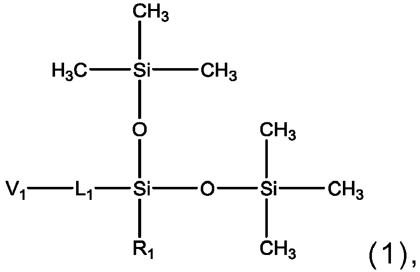 wherein V₁ is 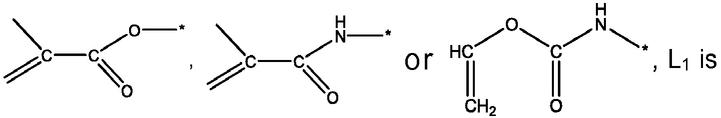 a C3-C7 alkylene group or 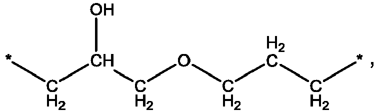 and R₁ is a methyl group or 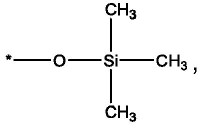 wherein * is a linkage position of V₁, L₁ and R₁ in the structure of formula (1).

5. The hydrogel composition of claim 3, wherein the silicone macromer has a structure of formula (2): 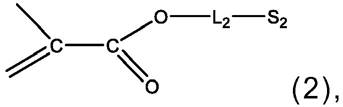 wherein L₂ is a C3-C10 alkylene group, 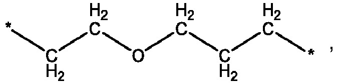 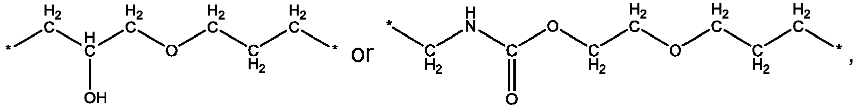 and S₂ 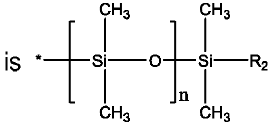 or 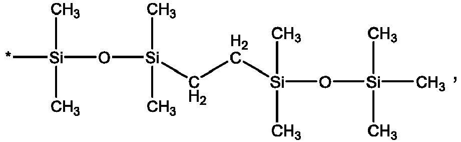 wherein R₂ is C3-C5 alkyl group, n is an integer from 2 to 4, and * is a linkage position of V₂ and S₂ in the structure of formula (2).

6. The hydrogel composition of claim 3, wherein the silicone prepolymer has a structure of formula (3): 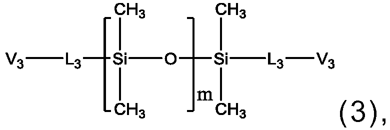 wherein V₃ is 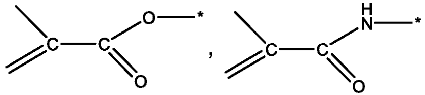 or 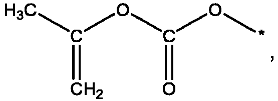 L₃ is a C2-C5 alkylene group, and m is an integer from 10 to 50, wherein * is a linkage position of V₃ in the structure of formula (3).

7. The hydrogel composition of claim 1, wherein when the yellow dye has the sulfonyl group, the yellow dye has a structure of formula (7):

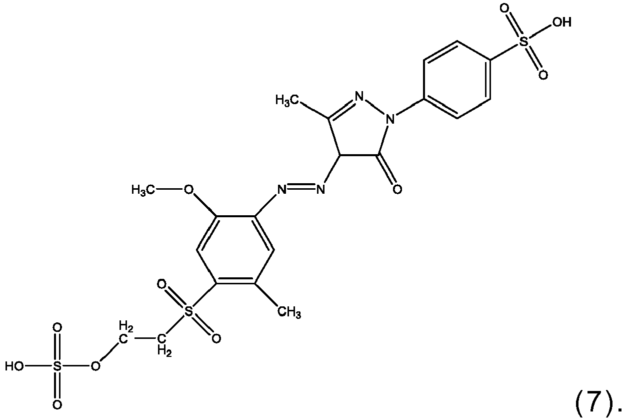

8. The hydrogel composition of claim 1, wherein when the yellow dye has the sulfonate group, the yellow dye has a structure of formula (8):

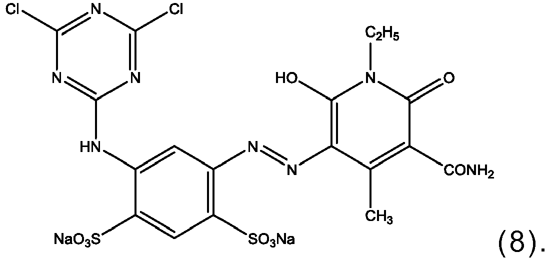

9. The hydrogel composition of claim 1, wherein the photoinitiator is a phosphine-oxide-based initiator, a titanium metallocene-based initiator or a combination thereof.

10. The hydrogel composition of claim 9, wherein the phosphine-oxide-based initiator is selected from a group consisting of diphenyl (2,4,6-triphenyl)phosphine oxide, bis(2,4,6-trimethylbenzoyl)phenyl phosphine oxide and bis(2,6-dimethoxylbenzoyl)(2,4,4-trimethylpentyl) phosphine oxide.

11. The hydrogel composition of claim 9, wherein the titanium metallocene-based initiator comprises dicyclopentadienyl bis[2,4-difluoro-3-(1-pyrrolyl) phenyl] titanium.

12. The hydrogel composition of claim 1, further comprising an UV-blocking monomer in a range from 0.5 to 2 parts by weight.

13. The hydrogel composition of claim 12, wherein the UV-blocking monomer has benzophenone, benzotriazole or a combination thereof.

14. The hydrogel composition of claim 13, wherein when the UV-blocking monomer has benzophenone, the UV-blocking monomer is selected from a group consisting of 4-methacryloxy-2-hydroxy benzophenone and 4-(2-acryloxyethoxy-2-hydroxy benzophenone.

15. The hydrogel composition of claim 13, wherein when the UV-blocking monomer has benzotriazole, the UV-blocking monomer is selected from a group consisting of 2-(2-hydroxy-5-methacryloxyethylphenyl)-2H-benzotriazole, 2-(2-hydroxy-5-methacryloxyethylphenyl)-2H-6-chloro-benzotriazole, 2-(2-hydroxy-5-methacryloxyethylphenyl)-2H- 6-methoxybenzotriazole, 2-[3'-t-butyl-5'-(3"-dimethylvinylsilylpropoxy)-2'-hydroxyphenyl]-5-methoxybenzotriazole, 2-[3'-t-butyl-5'-(3"-methacryloyloxypropyl)phenyl]-5-chlorobenzotriazole and 2-[2'-hydroxy-5'- (γ-methacryloyloxypropoxy)-3'-tert-butylphenyl]-5-methoxy-2H-benzotriazole.

16. The hydrogel composition of claim 1, further comprising a hydrophobic monomer in a range from 1 to 10 parts by weight.

17. The hydrogel composition of claim 16, wherein the hydrophobic monomer is selected from a group consisting of methyl methacrylate, butyl methacrylate, n-hexyl methacrylate and isobornyl methacrylate.

18. The hydrogel composition of claim 1, further comprising an organic solvent in a range from 1 to 30 parts by weight.

19. The hydrogel composition of claim 18, wherein the organic solvent is selected from a group consisting of glycerol, n-butanol, t-butanol, t-amyl alcohol and n-hexanol.

20. A hydrogel contact lens, comprising:
a contact lens body made of the hydrogel composition of any of claims 1-19.

## Patentansprüche

1. Hydrogelzusammensetzung zur Herstellung einer Hydrogelkontaktlinse, wobei die Hydrogelzusammensetzung umfasst:
ein hydrophiles Monomer in einem Bereich von 30 bis 99,68 Gewichtsteilen, wobei das hydrophile Monomer aus einer Gruppe ausgewählt ist, die aus N-Vinylpyrrolidon (NVP), 2-Hydroxyethylmethacrylat (HEMA), Glycerylmethacrylat (GM), Methacrylsäure, Acrylsäure, N,N-Dimethylacrylamid (DMA), N,N-Dimethylmethacrylamid und N-Vinyl-N-methylacetamid besteht;
ein blaues Licht blockierendes Monomer in einem Bereich von 0,02 bis 0,5 Gewichtsteilen und mit einem gelben Farbstoff, wobei der gelbe Farbstoff eine Sulfonylgruppe, eine Sulfonatgruppe, eine Struktur der Formel (6) 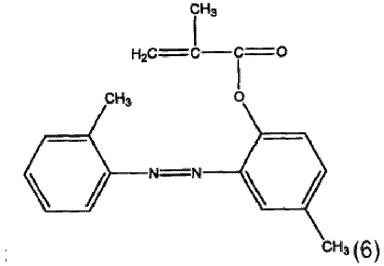 oder eine Struktur der Formel (9) hat: 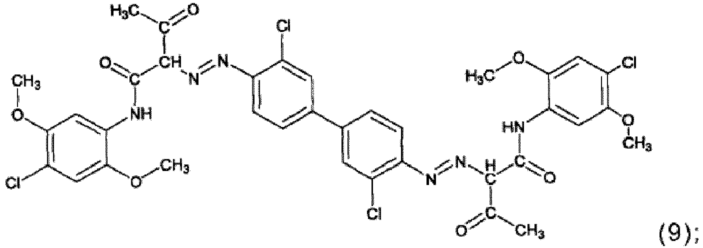
einen Vernetzer in einem Bereich von 0,1 bis 1 Gewichtsteil, wobei der Vernetzer aus einer Gruppe ausgewählt ist, die aus Ethylenglycoldimethacrylat, Diethylenglycolmethacrylat, Triethylenglycoldimethacrylat, Tetraetylenglycoldimethacrylat, Allyldimethacrylat, Ethylenglycoldiallylether, Triethylenglycoldiallylether, Tetraethylenglycoldiallylether, Triallyl-s-triazin-2,4,6(1H,3H,5H)-trion und 1,1,1-Trimethylolpropantrimethacrylat besteht; und
einen Initiator in einem Bereich von 0,2 bis 2 Gewichtsteilen, wobei es sich bei dem Initiator um einen Fotoinitiator handelt.

2. Hydrogelzusammensetzung nach Anspruch 1, wobei das hydrophile Monomer in einem Bereich von 96,5 bis 99,68 Gewichtsteilen vorliegt.

3. Hydrogelzusammensetzung nach Anspruch 1, darüber hinaus eine Silikonkomponente umfassend, die aus einer Gruppe ausgewählt ist, die aus einem Silikonmonomer, einem Silikonmakromer und einem Silikonpräpolymer besteht, und wobei die Silikonkomponente in einem Bereich von 5 bis 59 Gewichtsteilen vorliegt und das hydrophile Monomer in einem Bereich von 30 bis 60 Gewichtsteilen vorliegt.

4. Hydrogelzusammensetzung nach Anspruch 3, wobei das Silikonmonomer eine Struktur der Formel (1) 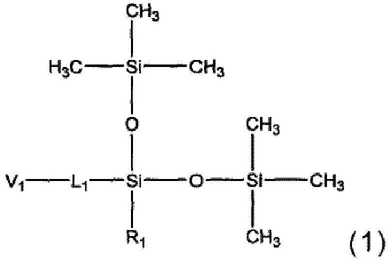 hat, worin V₁ 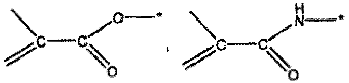 oder 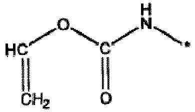 L₁ eine C3∼C7Alkylengruppe oder 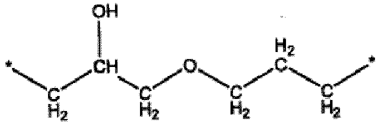 ist, und R₁ eine Methylgruppe oder 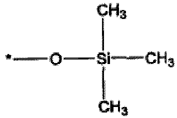 ist, wobei * eine Bindungsstelle von V₁, L₁ und R₁ in der Struktur der Formel (1) ist.

5. Hydrogelzusammensetzung nach Anspruch 3, wobei das Silikonmakromer eine Struktur der Formel (2) 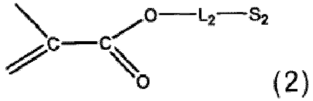 hat, worin L₂ eine C3∼C10 Alkylengruppe, 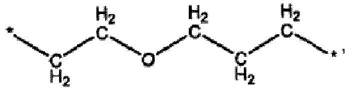 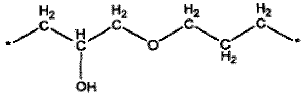 oder 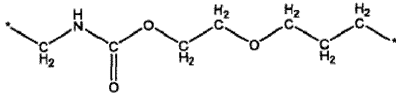 ist, und S₂ 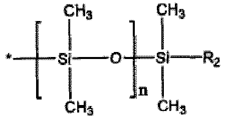 oder 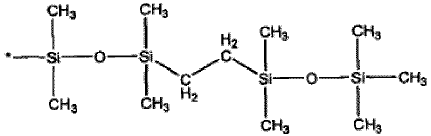 ist, worin R₂ eine C3∼C5 Alkylgruppe ist, n eine ganze Zahl von 2 bis 4 ist, und * eine Bindungsstelle von V₂ und S₂ in der Struktur der Formel (2) ist.

6. Hydrogelzusammensetzung nach Anspruch 3, wobei das Silikonpräpolymer eine Struktur der Formel (3) 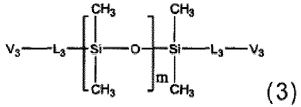 hat, worin V₃ 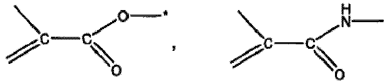 oder 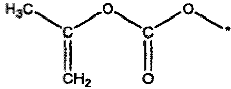 ist, L₃ eine C2∼C5 Alkylengruppe ist, und m eine ganze Zahl von 10 bis 50 ist, wobei * eine Bindungsstelle von V₃ in der Struktur der Formel (3) ist.

7. Hydrogelzusammensetzung nach Anspruch 1, wobei, wenn der gelbe Farbstoff die Sulfonylgruppe hat, der gelbe Farbstoff eine Struktur der Formel (7): hat.

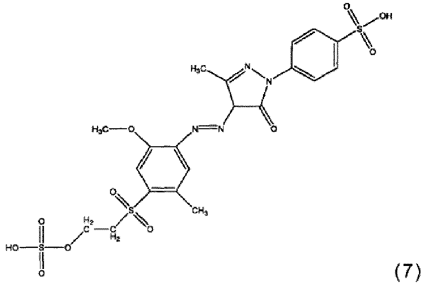

8. Hydrogelzusammensetzung nach Anspruch 1, wobei, wenn der gelbe Farbstoff die Sulfonatgruppe hat, der gelbe Farbstoff eine Struktur der Formel (8): hat.

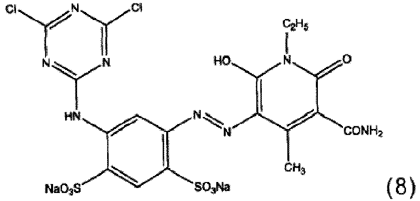

9. Hydrogelzusammensetzung nach Anspruch 1, wobei der Fotoinitiator ein Initiator auf Phosphinoxidbasis, ein Initiator auf Titanmetallocenbasis oder eine Kombination von diesen ist.

10. Hydrogelzusammensetzung nach Anspruch 9, wobei der Initiator auf Phosphinoxidbasis aus einer Gruppe ausgewählt ist, die aus Diphenyl(2,4,6-triphenyl)phosphinoxid, bis(2,4,6-Trimethylbenzoyl)phenylphosphinoxid und bis(2,6-Dimethoxylbenzoyl)(2,4,4-trimethylpentyl)phosphinoxid besteht.

11. Hydrogelzusammensetzung nach Anspruch 9, wobei der Initiator auf Titanmetallocenbasis Dicyclopentadienyl bis[2,4-difluor-3-(1-pyrrolyl)phenyl]Titan umfasst.

12. Hydrogelzusammensetzung nach Anspruch 1, darüber hinaus ein UV blockierendes Monomer in einem Bereich von 0,5 bis 2 Gewichtsteilen umfassend.

13. Hydrogelzusammensetzung nach Anspruch 12, wobei das UV blockierende Monomer Benzophenon, Benzotriazol oder eine Kombination von diesen aufweist.

14. Hydrogelzusammensetzung nach Anspruch 13, wobei, wenn das UV blockierende Monomer Benzophenon aufweist, das UV blockierende Monomer aus einer Gruppe ausgewählt ist, die aus 4-Methacryloxy-2-hydroxybenzophenon und 4-(2-Acryloxyethoxy-2-hydroxybenzophenon besteht.

15. Hydrogelzusammensetzung nach Anspruch 13, wobei, wenn das UV blockierende Monomer Benzotriazol aufweist, das UV blockierende Monomer aus einer Gruppe ausgewählt ist, die aus 2-(2-Hydroxy-5-methacryloxyethylphenyl)-2H-benzotriazol, 2-(2-Hydroxy-5-methacryloxyethylphenyl)-2H-6-chlorbenzotriazol, 2-(2-Hydroxy-5-methacryloxyethylphenyl)-2H-6-methoxybenzotriazol, 2-[3'-t-butyl-5'-(3"-dimethylvinylsilylpropoxy)-2'-hydroxyphenyl]-5-methoxybenzotriazol, 2-[3'-t-butyl-5'-(3"-methacryloyloxypropyl)phenyl]-5-chlorbenzotriazol und 2-[2'-Hydroxy-5'-(γ-methacryloyloxypropoxy)-3'-tert-butylphenyl]-5-methoxy-2H-benzotriazol besteht.

16. Hydrogelzusammensetzung nach Anspruch 1, darüber hinaus ein hydrophobes Monomer in einem Bereich von 1 bis 10 Gewichtsteilen umfassend.

17. Hydrogelzusammensetzung nach Anspruch 16, wobei das hydrophobe Monomer aus einer Gruppe ausgewählt ist, die aus Methylmethacrylat, Butylmethacrylat, n-Hexylmethacrylat und Isobornylmethacrylat besteht.

18. Hydrogelzusammensetzung nach Anspruch 1, darüber hinaus ein organisches Lösungsmittel in einem Bereich von 1 bis 30 Gewichtsteilen umfassend.

19. Hydrogelzusammensetzung nach Anspruch 18, wobei das organische Lösungsmittel aus einer Gruppe ausgewählt ist, die aus Glycerol, n-Butanol, t-Butanol, t-Amylalkohol und n-Hexanol besteht.

20. Hydrogelkontaktlinse, umfassend:
einen Kontaktlinsenkörper, der aus der Hydrogelzusammensetzung nach einem der Ansprüche 1 bis 19 hergestellt ist.

## Revendications

1. Composition d'hydrogel pour la fabrication d'une lentille de contact à hydrogel, la composition d'hydrogel comprenant :
un monomère hydrophile dans une plage allant de 30 à 99,68 parties en poids, sachant que le monomère hydrophile est sélectionné dans un groupe constitué par le N-vinyl pyrrolidone (NVP), le 2-hydroxyéthyl méthacrylate (HEMA), le glycéryl méthacrylate (GM), l'acide méthacrylique, l'acide acrylique, le N,N-diméthyl acrylamide (DMA), le N,N-diméthyl méthacrylamide et le N-vinyl-N-méthyl acétamide ;
un monomère anti-lumière bleue dans une plage allant de 0,02 à 0,5 partie en poids et présentant un colorant jaune, sachant que le colorant jaune comporte un groupe sulfonyle, un groupe sulfonate, une structure de formule (6) : 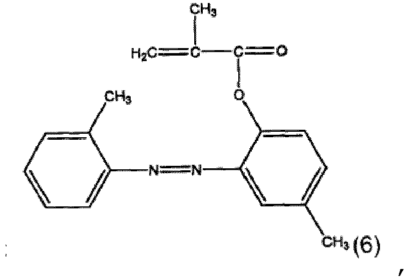 ou une structure de formule (9) : 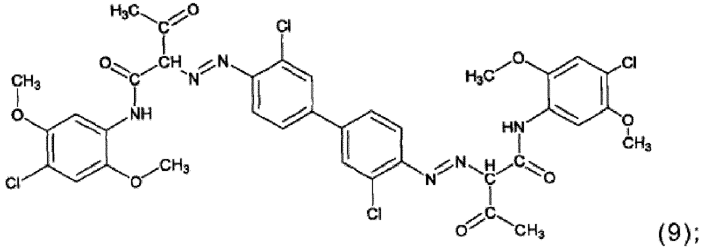
un réticulant dans une plage allant de 0,1 à 1 partie en poids, sachant que le réticulant est sélectionné dans un groupe constitué par l'éthylène glycol diméthacrylate, le diéthylène glycol diméthacrylate, le triéthylène glycol diméthacrylate, le tétraéthylène glycol diméthacrylate, l'allyl méthacrylate, l'éthylène glycol diallyl éther, le triéthylène glycol diallyl éther, le tétraéthylène glycol diallyl éther, le triallyl-s-triazine-2,4,6(1H,3H,5H)-trione et le 1,1,1-triméthylolpropane triméthacrylate ; et
un initiateur dans une plage allant de 0,2 à 2 parties en poids, sachant que l'initiateur est un photoinitiateur.

2. La composition d'hydrogel de la revendication 1, sachant que le monomère hydrophile est compris dans une plage allant de 96,5 à 99,68 parties en poids.

3. La composition d'hydrogel de la revendication 1, comprenant en outre un composant de silicone sélectionné dans un groupe constitué par un monomère de silicone, un macromère de silicone et un prépolymère de silicone, et sachant que le composant de silicone est compris dans une plage allant de 5 à 59 parties en poids, et le monomère hydrophile est compris dans une plage allant de 30 à 60 parties en poids.

4. La composition d'hydrogel de la revendication 3, sachant que le monomère de silicone a une structure de formule (1) : 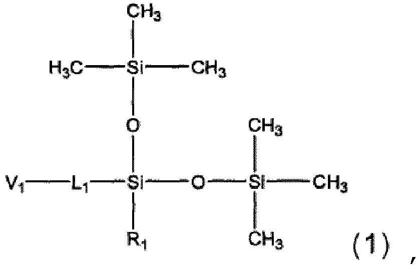 sachant que V₁ est 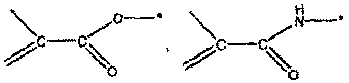 ou 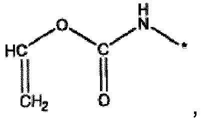 L₁ est un groupe alkylène en C3-C7 ou 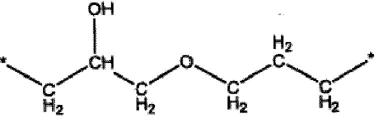 et R₁ est un groupe méthyle ou 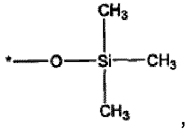 sachant que * est une position de liaison de V₁, L₁ et R₁ dans la structure de formule (1).

5. La composition d'hydrogel de la revendication 3, sachant que le macromère de silicone a une structure de formule (2) : 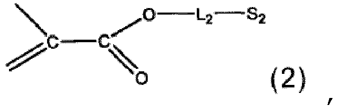 sachant que L₂ est un groupe alkylène en C3∼C10, 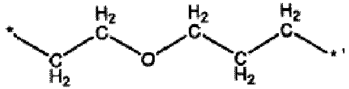 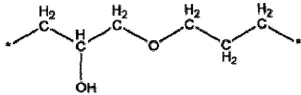 ou 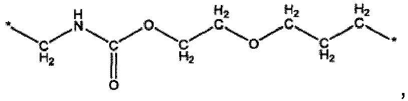 et S₂ est 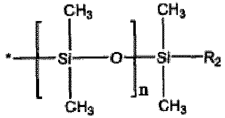 ou 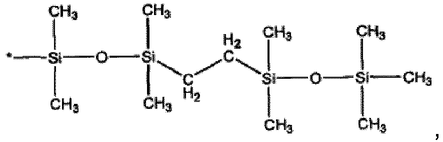 sachant que R₂ est un groupe alkyle en C3∼C5, n est un entier de 2 à 4, et * est une position de liaison de V₂ et S₂ dans la structure de formule (2).

6. La composition d'hydrogel de la revendication 3, sachant que le prépolymère de silicone a une structure de formule (3) : 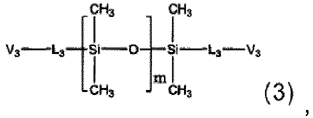 sachant que V₃ est 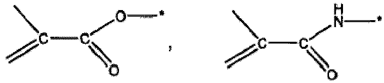 ou 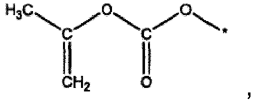 L₃ est un groupe alkylène en C2∼C5, et m est un entier de 10 à 50, sachant que * est une position de liaison de V₃ dans la structure de formule (3).

7. La composition d'hydrogel de la revendication 1, sachant que lorsque le colorant jaune comporte le groupe sulfonyle, le colorant jaune a la structure de formule (7) :

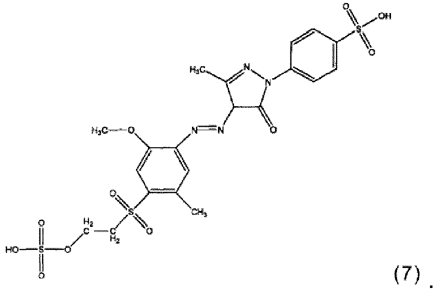

8. La composition d'hydrogel de la revendication 1, sachant que lorsque le colorant jaune comporte le groupe sulfonate, le colorant jaune a la structure de formule (8) :

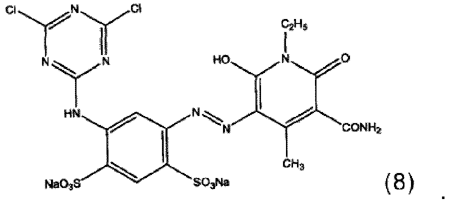

9. La composition d'hydrogel de la revendication 1, sachant que le photoinitiateur est un initiateur à base d'oxyde de phosphine, un initiateur à base de métallocène de titane ou une combinaison de ceux-ci.

10. La composition d'hydrogel de la revendication 9, sachant que l'initiateur à base d'oxyde de phosphine est sélectionné dans un groupe constitué par l'oxyde de diphényl (2,4,6-triphényl) phosphine, l'oxyde de bis(2,4,6-triméthylbenzoyl) phényl phosphine et l'oxyde de bis(2,6-diméthoxylbenzoyl)(2,4,4-triméthylpentyl) phosphine.

11. La composition d'hydrogel de la revendication 9, sachant que l'initiateur à base de métallocène de titane comprend du titane de dicyclopentadiényl bis[2,4-difluoro-3-(1-pyrrolyl) phényl].

12. La composition d'hydrogel de la revendication 1, comprenant en outre un monomère anti-UV dans une plage allant de 0,5 à 2 parties en poids.

13. La composition d'hydrogel de la revendication 12, sachant que le monomère anti-UV comporte du benzophénone, du benzotriazole ou une combinaison de ceux-ci.

14. La composition d'hydrogel de la revendication 13, sachant que lorsque le monomère anti-UV comporte du benzophénone, le monomère anti-UV est sélectionné dans un groupe constitué par le 4-méthacryloxy-2-hydroxy benzophénone et le 4-(2-acryloxyéthoxy-2-hydroxy)benzophénone.

15. La composition d'hydrogel de la revendication 13, sachant que lorsque le monomère anti-UV comporte du benzotriazole, le monomère anti-UV est sélectionné dans un groupe constitué par le 2-(2-hydroxy-5-méthacryloxyéthylphényl)-2H-benzotriazole, le 2-(2-hydroxy-5-méthacryloxyéthylphényl)-2H-6-chloro-benzotriazole, le 2-(2-hydroxy-5-méthacryloxyéthylphényl)-2H-6-méthoxybenzotriazole, le 2-[3'-t-butyl-5'-(3"-diméthylvinylsilylpropoxy)-2'-hydroxyphényl]-5-méthoxybenzotriazole, le 2-[3'-t-butyl-5'-(3"-méthacryloyloxypropyl)phényl]-5-chlorobenzotriazole et le 2-[2'-hydroxy-5'-(γ-méthacryloyloxypropoxy)-3'-tert-butylphényl]-5-méthoxy-2H-benzotriazole.

16. La composition d'hydrogel de la revendication 1, comprenant en outre un monomère hydrophobe dans une plage allant de 1 à 10 parties en poids.

17. La composition d'hydrogel de la revendication 16, sachant que le monomère hydrophobe est sélectionné dans un groupe constitué par le méthyl méthacrylate, le butyl méthacrylate, le n-hexyl méthacrylate et l'isobornyl méthacrylate.

18. La composition d'hydrogel de la revendication 1, comprenant en outre un solvant organique dans une plage allant de 1 à 30 parties en poids.

19. La composition d'hydrogel de la revendication 18, sachant que le solvant organique est sélectionné dans un groupe constitué par le glycérol, le n-butanol, le t-butanol, le t-amyl alcool et le n-hexanol.

20. Lentille de contact à hydrogel, comprenant :
un corps de lentille de contact composé de la composition d'hydrogel de l'une quelconque des revendications 1 à 19.
